# EUROPÄISCHE PATENTSCHRIFT

(11) **EP 1 070 867 B1**
(45) Veröffentlichungstag und Bekanntmachung des Hinweises auf die Patenterteilung: **07.04.2004**
(21) Anmeldenummer: 00115443.4
(22) Anmeldetag: 18.07.2000
(51) Int. Cl.: F16D 23/12, G05G 1/14, B60K 23/02

(54) **Vorrichtung zur Betätigung einer Kupplung, insbesondere für Kraftfahrzeuge**
Device for actuating a clutch, especially for vehicles
Dispositif pour actionner un embrayage, en particulier pour des véhicules

(30) Priorität: 21.07.1999 DE 19934238
(43) Veröffentlichungstag der Anmeldung: 24.01.2001
(73) Patentinhaber: FTE automotive GmbH & Co. KG, 96106 Ebern (DE)
(72) Erfinder: Leuschke, Rainer, Dipl.-Ing., Auburn Hills, Michigan 48326 (US); Macht, Egid, 81247 München (DE)
(74) Vertreter: Oppermann, Mark, Dipl.-Ing.

(56) Entgegenhaltungen:
- DE-A- 4 326 183
- DE-A- 19 650 577
- DE-C- 19 624 605
- FR-A- 2 787 211
- US-A- 5 215 176

## Beschreibung

Die vorliegende Erfindung bezieht sich auf eine Vorrichtung zur Betätigung einer Kupplung gemäß dem Oberbegriff des Patentanspruchs 1. Insbesondere bezieht sich die Erfindung auf eine Vorrichtung zur federkraftunterstützten Betätigung einer Kraftfahrzeugkupplung.

Derartige Vorrichtungen sind im Stand der Technik in unterschiedlicher Ausgestaltung bekannt und kommen in der Kraftfahrzeugindustrie massenweise zum Einsatz. Bei diesen Vorrichtungen wird die für den Auskuppelvorgang auf das Kupplungspedal aufzubringende Betätigungskraft, welche bei den erforderlichen hohen Anpreßdrücken von Kupplungen moderner Hochleistungsmotoren entsprechend groß ist, durch eine am Kupplungspedal angreifende Feder auf ein vertretbares Maß verringert.

So offenbaren beispielsweise die Druckschriften DE 29 23 027 C2, DE 36 36 748 C1, DE 38 41 719 C2, DE 41 10 476 A1, DE 44 35 260 A1, DE 196 50 577 A1 oder US-PS 3 430 512 Vorrichtungen zur Betätigung einer Kraftfahrzeugkupplung, die jeweils ein verschwenkbar gelagertes Kupplungspedal aufweisen, welches zur Erzeugung eines Betätigungsdrucks mit der Kolbenstange eines Hydraulikzylinders verbunden ist. Das Kupplungspedal ist zwischen zwei Endstellungen bzw. -lagen verschwenkbar, von denen eine dem eingerückten und die anderen dem ausgerückten Zustand der Kupplung entspricht. Ferner haben diese Vorrichtungen jeweils mindestens eine verschwenkbar gelagerte Übertotpunktfeder, die derart an dem Kupplungspedal angelenkt ist, daß sie bei einer Stellung des Kupplungspedals zwischen einer Totpunktlage einerseits, bei der die Wirklinie der bei Verschwenken des Kupplungspedals infolge ihrer Anlenkung ebenfalls verschwenkenden Übertotpunktfeder durch den Schwenkpunkt des Kupplungspedals geht, und einer der Endlagen andererseits eine in Richtung dieser Endlage gerichtete Kraft auf das Kupplungspedal ausübt.

Bei diesem Stand der Technik ist sowohl das Kupplungspedal als auch die Übertotpunktfeder fahrzeugaufbauseitig an einem Pedalbock bzw. einem gesondert vorgesehenen Rahmen verschwenkbar gelagert. Ein Nachteil dieses Stands der Technik ist darin zu sehen, daß sich die Montage der Vorrichtung am Kraftfahrzeug insbesondere anfänglich in der Montagelinie des Kraftfahrzeugherstellers relativ schwierig gestaltet.

Ferner zeigt die DE 43 26 183 A1 einen Lagerbock für die verschwenkbare Lagerung eines Kupplungspedals, der eine Grundplatte zur Befestigung beispielsweise an der Quer- oder Spritzwand eines Kraftfahrzeug-Vorderwagens sowie mindestens eine die Lager- oder Schwenkachse des Kupplungspedals halternde Lagerwange enthält. Um die Teilevielfalt zu verringern, ist der Lagerbock als Spritzgußteil aus Leichtmetall oder Kunststoff ausgebildet, und in seiner Grundplatte ist das Zylindergehäuse eines Geberzylinders für eine hydraulische Kupplungsbetätigung integriert, dessen Zylinderraum zum Kupplungspedal hin offen ist. Bei hydraulischer Kupplungsbetätigung wird der Geberzylinder durch Einbau eines Kolbens nebst Kolbenstange komplettiert, bei mechanischer Kupplungsbetätigung unterbleibt dagegen diese Komplettierung. Zwischen der Grundplatte des Lagerbocks und dem an der Lagerwange des Lagerbocks angelenkten Kupplungspedal ist ggf. eine Übertotpunktfedervorrichtung vorgesehen, die sich an einer Lagerpfanne abstützt, welche in der Grundplatte des Lagerbocks eingegossen ist.

Schließlich offenbart die den Oberbegriff des Patentanspruchs 1 bildende DE 196 24 605 C1 eine Betätigungsvorrichtung für eine Kupplung eines Fahrzeugs, die mit einem Kupplungspedal versehen ist, das schwenkbar an einem Pedalblock angeordnet ist, und einen in dem Kupplungspedal angeordneten Geberzylinder hat, der mit einer Kolbenstange zur Betätigung des Geberkolbens versehen ist. Die Kolbenstange ist in Abhängigkeit von einer Schwenkbewegung des Kupplungspedals betätigbar und mit einer Übertotpunktfeder versehen. Die Kolbenstange ist am kolbenfernen Ende an einem Ende eines Winkelhebels angelenkt, der an dem Kupplungspedal schwenkbar befestigt ist, wobei an dem anderen Ende des Winkelhebels die Übertotpunktfeder mit einem Ende angreift, während das andere Ende der Übertotpunktfeder sich am Kupplungspedal abstützt. Der Winkelhebel ist an dem von dem Angriffspunkt der Übertotpunktfeder abgewandten Ende mit einem Verbindungsglied verbunden, das an dem Kupplungsbock angelenkt ist.

Gegenüber dem geschilderten Stand der Technik liegt der Erfindung die Aufgabe zugrunde, eine einfach ausgebildete Vorrichtung zur Betätigung einer Kupplung zu schaffen, die leicht am jeweiligen Einbauort, beispielsweise am ortsfesten Pedalbock eines Kraftfahrzeugs, montiert werden kann.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 9.

Bei einer Vorrichtung zur Betätigung einer Kupplung, insbesondere für Kraftfahrzeuge, mit einem verschwenkbar an einer Lagerstelle gelagerten Betätigungshebel, welcher zur Erzeugung eines Betätigungsdrucks mit einem Geberzylinder wirkverbunden ist, und einer verschwenkbar an einer Lagerstelle gelagerten Übertotpunktfeder, die derart an dem Betätigungshebel angelenkt ist, daß sie bei einer Stellung des Betätigungshebels zwischen einer Totpunktlage und einer Endlage eine in Richtung dieser Endlage gerichtete Kraft auf den Betätigungshebel ausübt, ist erfindungsgemäß sowohl die Lagerstelle für die Übertotpunktfeder als auch die Lagerstelle für den Betätigungshebel an dem Geberzylinder vorgesehen, so daß die Übertotpunktfeder und der Betätigungshebel relativ zum Geberzylinder bewegbar sind, wobei sowohl die Lagerstelle für die Übertotpunktfeder als auch die Lagerstelle für den Betätigungshebel gleichzeitig als Befestigungsstelle ausgeführt ist, die der Befestigung des aus Geberzylinder, Betätigungshebel und Übertotpunktfeder zusammengefügten, vormontierten Verbunds an einem Pedalbock dient.

Somit wird ein einfacher, mit wenigen Teilen ausgebildeter Verbund aus Betätigungshebel, Geberzylinder und Übertotpunktfeder geschaffen, der geschlossen vormontiert und daher insbesondere in der Montagelinie des Kraftfahrzeugherstellers aber auch beim Nachrüsten bzw. Austausch ohne spezielle Werkzeuge für z.B. das Vorspannen der Übertotpunktfeder einfach und schnell im Kraftfahrzeug montiert werden kann. Die damit verbundenen Logistik- und Kostenvorteile liegen auf der Hand.

Erfolgt der Einbau bzw. das Vorspannen der Übertotpunktfeder schon bei der Vormontage der erfindungsgemäßen Betätigungsvorrichtung, so befinden sich bei der Montage der Betätigungsvorrichtung im Kraftfahrzeug die relativ zum Geberzylinder bewegbaren Teile, nämlich Betätigungshebel und Übertotpunktfeder, infolge der Vorspannung der Übertotpunktfeder in ihrer jeweiligen Endlage, die im eingebauten Zustand der Betätigungsvorrichtung dem ein- bzw. ausgerückten Zustand der Kupplung entspricht, d.h. in einer definierten Relativlage zueinander, was in vorteilhafter Weise eine automatisierte Montage der Befestigungsvorrichtung im Kraftfahrzeug begünstigt. Steht dabei der vorgespannte Betätigungshebel in seiner später dem ausgerückten Zustand der Kupplung entsprechenden Endlage, so ist die Betätigungsvorrichtung für den Einbau in vorteilhafter Weise besonders kompakt. Nach dem Einbau der Betätigungsvorrichtung ist der Betätigungshebel zum Befüllvorgang der hydraulischen Kupplungsbetätigung dann nur noch in seine Grundstellung, d.h. die andere Endlage zurückzuziehen, die dem eingerückten Zustand der Kupplung entspricht.

Ein besonderer Vorteil der erfindungsgemäßen Betätigungsvorrichtung wird ferner darin gesehen, daß der im Kraftfahrzeug vorzusehende Pedalbock hinsichtlich seines Gewichts, seiner Größe bzw. seines Bauraumbedarfs und seiner Gestehungskosten optimiert ausgebildet werden kann, weil alle für die Funktion der Betätigungsvorrichtung notwendigen Schwenklagerstellen am Geberzylinder vorhanden sind. Somit ist es möglich, den Pedalbock konstruktiv alleine für die Lagerung des Gaspedals und des Bremspedals auszulegen, wobei lediglich einfache Maßnahmen (z.B. geeignete Bohrungen) am Pedalbock vorgesehen sein können, um eine Befestigung der erfindungsgemäßen Betätigungsvorrichtung am Pedalbock zu gestatten. Im Ergebnis kann ein und derselbe Pedalbock sowohl für Kraftfahrzeuge mit automatischer Kupplungsbetätigung bzw. Automatikgetrieben (Kupplungspedal nicht notwendig) als auch für Kraftfahrzeuge mit konventioneller Kupplungsbetätigung (Kupplungspedal notwendig) verwendet werden. Bei der in der Kraftfahrzeugindustrie verbreiteten Plattformbauweise, bei welcher insbesondere Fahrgestell, Motor und Antriebsstrang für unterschiedliche Modellreihen identisch sind, potenziert sich dieser Vorteil noch.

Auch ist es möglich, die erfindungsgemäße, funktional eigenständige Betätigungsvorrichtung den jeweiligen Erfordernissen entsprechend räumlich getrennt vom Pedalbock im Kraftfahrzeug unterzubringen. Mit der erfindungsgemäßen Betätigungsvorrichtung ergibt sich somit eine erhöhte räumliche Flexibilität gegenüber dem eingangs geschilderten Stand der Technik. Ein vorteilhafter Begleiteffekt ist hier noch darin zu sehen, daß der Pedalbock als gemeinsame Systemkomponente von Kupplungssystem und Bremssystem wegfällt, so daß eine entsprechende Abstimmung dieser sich insbesondere hinsichtlich der Sicherheitsanforderungen unterscheidenden Systeme aufeinander nicht mehr notwendig ist.

Schließlich ist die am Geberzylinder vorgesehene Lagerstelle für die Übertotpunktfeder und die am Geberzylinder vorgesehene Lagerstelle für den Betätigungshebel gleichzeitig als Befestigungsstelle ausgeführt, die der Befestigung des aus Geberzylinder, Betätigungshebel und Übertotpunktfeder zusammengefügten, vormontierten Verbunds an einem Pedalbock dient. Diese Ausbildung der Betätigungsvorrichtung verringert gegenüber dem oben beschriebenen Stand der Technik gemäß beispielsweise der DE 36 36 748 C1 oder der DE 41 10 476 Al des weiteren nicht nur die Anzahl der zur Befestigung am Pedalbock benötigten Teile und der Befestigungsstellen zum Pedalbock, sondern hat darüber hinaus den Vorteil, daß sich die Befestigungsstellen an vorbestimmten bzw. definierten Punkten der Betätigungsvorrichtung befinden, deren Relativlage zum Geberzylinder von der Relativlage des Betätigungshebels bzw. der Übertotpunktfeder zum Geberzylinder gänzlich unabhängig ist. Dies vereinfacht und beschleunigt die Montage der Betätigungsvorrichtung am Pedalbock nochmals deutlich, weil dazu der Betätigungshebel nicht erst in eine bestimmte Stellung gebracht werden muß, wie es im oben zitierten Stand der Technik notwendig war. Ein weiterer Vorteil ergibt sich hier ferner daraus, daß sich die über den Betätigungshebel und durch die Übertotpunktfeder aufgebrachten Kräften im montierten Zustand der Betätigungsvorrichtung am Pedalbock abstützen können, was es ermöglicht, das Gehäuse des Geberzylinders gewichtsoptimiert bzw. leichtbauend insbesondere aus Kunststoff auszubilden, wie im Patentanspruch 7 angegeben.

Gemäß dem Patentanspruch 2 weist die Lagerstelle für den Betätigungshebel eine vorzugsweise metallische Bundhülse auf, die mit ihrem Mittelabschnitt ein am Gehäuse des Geberzylinders vorgesehenes Lagerauge sowie eine im Betätigungshebel ausgebildete Bohrung durchgreift und zu beiden Seiten ihres Mittelabschnitts mit jeweils einem Ringbund versehen ist, um den Betätigungshebel am Gehäuse des Geberzylinders verschwenkbar zu halten. In entsprechender Weise hat gemäß dem Patentanspruch 3 die Lagerstelle für die Übertotpunktfeder eine vorzugsweise metallische Bundhülse, die mit ihrem Mittelabschnitt ein am Gehäuse des Geberzylinders vorgesehenes Lagerauge sowie eine in einem Federteller für die Übertotpunktfeder ausgebildete Bohrung durchgreift und zu beiden Seiten ihres Mittelabschnitts mit jeweils einem Ringbund versehen ist, um den Federteller für die Übertotpunktfeder am Gehäuse des Geberzylinders verschwenkbar zu halten. Diese Bundhülsen sorgen für eine sichere und zuverlässige Gelenkverbindung der relativ zueinander bewegbaren Teile, die zudem fertigungstechnisch einfach ausgebildet werden kann. Das für ein leichtes Verschwenken der relativ zueinander bewegbaren Teile notwendige, geringfügige Axialspiel der Teile auf der Bundhülse ist vorteilhaft schon vor der Montage der Betätigungsvorrichtung am Pedalbock definiert eingestellt und wird bei der Montage der Betätigungsvorrichtung auch nicht verändert. Schließlich sind bei Verwendung von Bundhülsen Transportsicherungen für die Betätigungsvorrichtung nicht notwendig.

Der Patentanspruch 8 sieht vor, daß ein an dem Pedalbock angebrachter Lagerbolzen die Bundhülse durchgreift und an seinem über die Bundhülse vorstehenden Ende auf der vom Pedalbock abgewandten Seite einen Sicherungsring trägt, um den aus Geberzylinder, Betätigungshebel und Übertotpunktfeder zusammengefügten, vormontierten Verbund am Pedalbock zu befestigen. Der vormontierte Verbund kann somit schnell und zuverlässig als Aufsteckeinheit am Pedalbock montiert werden. Entsprechendes gilt für die im Patentanspruch 9 angegebene Alternative, gemäß der der Pedalbock einen Gewindeabschnitt aufweist, in den eine die Bundhülse durchdringende Schraube eingeschraubt ist, deren Kopf die Bundhülse auf der vom Pedalbock abgewandten Seite hintergreift, um den aus Geberzylinder, Betätigungshebel und Übertotpunktfeder zusammengefügten, vormontierten Verbund am Pedalbock zu befestigen.

Nach der Lehre des Patentanspruchs 4 ist die Lagerstelle für den Betätigungshebel zweckmäßig an einer einstückig am Gehäuse des Geberzylinders angeformten Strebe ausgebildet, die sich von einer Längsseite des Geberzylindergehäuses wegerstreckt, was in einfacher Weise den erforderlichen Abstand zwischen der Lagerstelle, um die der Betätigungshebel verschwenkt wird, und der Anlenkstelle der Kolbenstange des Geberzylinders am Betätigungshebel schafft.

Gemäß dem Patentanspruch 5 ist die Übertotpunktfeder mit einem Ende auf der Längsseite des Geberzylindergehäuses, von der sich die Strebe wegerstreckt, am Geberzylindergehäuse verschwenkbar gelagert und der Betätigungshebel als Winkel mit zwei Schenkeln ausgebildet. Dabei ist das andere Ende der Übertotpunktfeder an dem zweiten Schenkel des Betätigungshebels angelenkt und der Geberzylinder mittels seiner Kolbenstange mit dem ersten Schenkel des Betätigungshebels wirkverbunden, während der Betätigungshebel selbst am Verbindungspunkt der Schenkel an der Lagerstelle der Strebe verschwenkbar gelagert ist. Mit dieser Ausgestaltung der Betätigungsvorrichtung, bei der die Übertotpunktfeder in Einbaulage im wesentlichen parallel zum Geberzylindergehäuse bzw. aus Richtung des Betätigungshebels gesehen seitlich vom Geberzylinder angeordnet werden kann, baut die Betätigungsvorrichtung in vorteilhafter Weise besonders flach.

Schließlich ist gemäß dem Patentanspruch 6 in einer zur Ausgestaltung nach dem Patentanspruch 5 alternativen Ausbildung der Betätigungsvorrichtung die Übertotpunktfeder mit einem Ende auf der von der Strebe abgewandten Längsseite des Geberzylindergehäuses am Geberzylindergehäuse verschwenkbar gelagert und der Betätigungshebel als Winkel mit zwei Schenkeln ausgebildet. Dabei ist das andere Ende der Übertotpunktfeder an dem ersten Schenkel des Betätigungshebels angelenkt und der Geberzylinder mittels seiner Kolbenstange mit dem Betätigungshebel am Verbindungspunkt der Schenkel wirkverbunden, während der Betätigungshebel selbst am zweiten Schenkel an der Lagerstelle der Strebe verschwenkbar gelagert ist. Mit einer solchen Ausbildung der Betätigungsvorrichtung, bei der der Betätigungshebel in derselben Ebene wie der Geberzylinder und die Übertotpunktfeder in Einbaulage aus Richtung des Betätigungshebels gesehen unterhalb des Geberzylinders angeordnet werden kann, baut die Betätigungsvorrichtung in vorteilhafter Weise besonders schmal.

Im folgenden wird die Erfindung anhand bevorzugter Ausführungsbeispiele unter Bezugnahme auf die beigefügte Zeichnung näher erläutert. Darin zeigen:
- Fig. 1: eine Seitenansicht einer erfindungsgemäß ausgebildeten Vorrichtung zur Betätigung einer Kraftfahrzeugkupplung in der Ruhe- bzw. Ausgangsstellung,
- Fig. 2: eine Draufsicht auf die Vorrichtung gemäß Fig. 1, wobei die Stellen, an denen der Betätigungshebel und die Übertotpunktfeder schwenkbar an dem Geberzylinder gelagert sind, aufgebrochen dargestellt sind,
- Fig. 3: eine vergrößerte Darstellung des Details X in Fig. 2, welches die Lagerstelle zwischen Übertotpunktfeder und Geberzylinder zeigt, und
- Fig. 4: eine Seitenansicht eines weiteren Ausführungsbeispiels einer erfindungsgemäßen Vorrichtung zur Betätigung einer Kraftfahrzeugkupplung in der Ruhe-bzw. Ausgangsstellung.

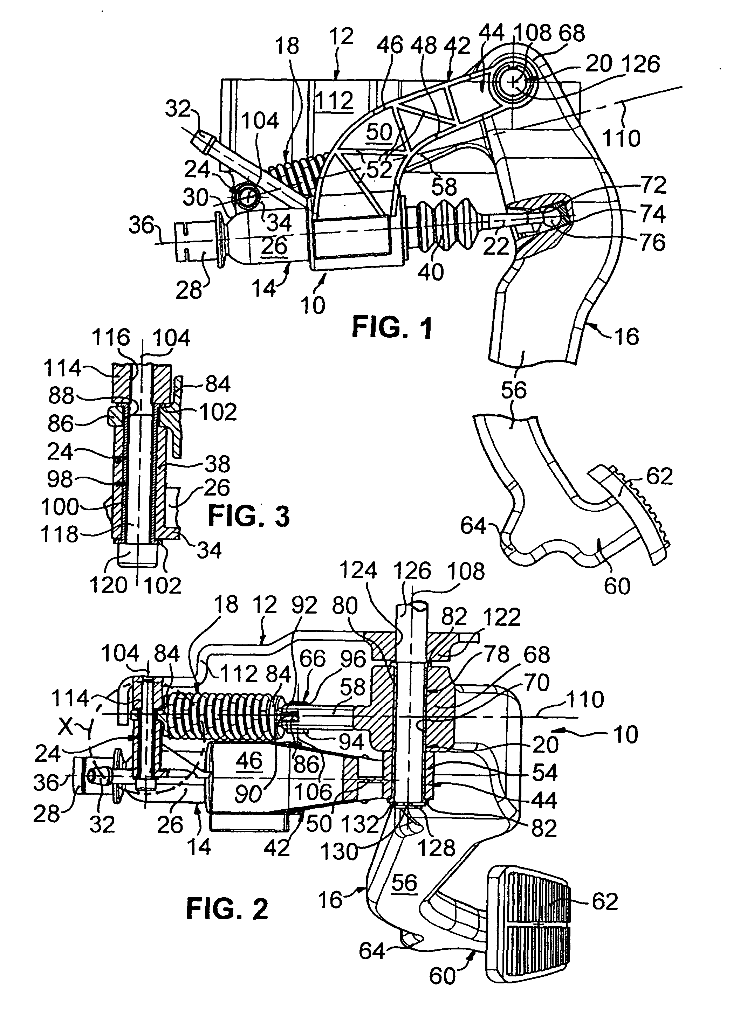

In den Fig. 1 und 2 ist eine Betätigungsvorrichtung 10 für eine Kraftfahrzeugkupplung in einem an einem Pedalbock 12 montierten Zustand dargestellt. Die Betätigungsvorrichtung 10 umfaßt im wesentlichen drei Komponenten, nämlich einen Geberzylinder 14, einen Betätigungshebel, im dargestellten Ausführungsbeispiel ein Kupplungspedal 16, und eine Übertotpunktfeder 18. Das Kupplungspedal 16 ist verschwenkbar an einer Lagerstelle 20 gelagert und zur Erzeugung eines Betätigungsdrucks mit dem Geberzylinder 14 über dessen Kolbenstange 22 wirkverbunden. Die Übertotpunktfeder 18 ist ebenfalls verschwenkbar an einer Lagerstelle 24 gelagert und derart an dem Kupplungspedal 16 angelenkt, daß sie bei einer Stellung des Kupplungspedals 16 zwischen einer Totpunktlage und einer Endlage eine in Richtung dieser Endlage gerichtete Kraft auf das Kupplungspedal 16 ausübt. Beide Lagerstellen 20, 24, d.h. sowohl die Lagerstelle 20 für das Kupplungspedal 16 als auch die Lagerstelle 24 für die Übertotpunktfeder 18, sind an dem Geberzylinder 14 vorgesehen, wie im folgenden noch näher beschrieben werden wird.

Der Geberzylinder 14 hat in an sich bekannter Weise ein Gehäuse 26 aus vorzugsweise Kunststoff, in dem ein Kolben (nicht dargestellt) längsverschieblich angeordnet ist. Der Kolben kann mittels der Kolbenstange 22 verschoben werden, um einen Betätigungsdruck zum Ausrücken der Kupplung zu erzeugen, der im angeschlossenen Zustand der Betätigungsvorrichtung 10 einem Nehmerzylinder (nicht dargestellt) über einen endseitig am Gehäuse 26 vorgesehenen Druckanschluß 28 anliegt. Das Gehäuse 26 ist auf seiner in Fig. 1 oberen Längsseite 30 ferner mit einem Nachlauf- bzw. Druckausgleichsanschluß 32 versehen, welcher im angeschlossenen Zustand der Betätigungsvorrichtung 10 mit einem Nachlaufbehälter (nicht dargestellt) hydraulisch verbunden ist.

Zwischen dem Druckausgleichsanschluß 32 und der oberen Längsseite 30 des Gehäuses 26 ist ein in der Seitenansicht gemäß Fig. 1 im wesentlichen dreieckiger Steg 34 vorgesehen, der den Druckausgleichsanschluß 32 gegenüber dem Gehäuse 26 abstützt. Von diesem Steg 34 erstreckt sich als Bestandteil der Lagerstelle 24 für die Übertotpunktfeder 18 ein quer zur Längsachse 36 des Geberzylinders 14 verlaufendes, hohlzylindrisches Lagerauge 38 weg, wie insbesondere in Fig. 3 zu erkennen ist.

Weiterhin ist das Gehäuse 26 zwischen dem Druckausgleichsanschluß 32 und seinem in Fig. 1 rechten Ende, aus dem die von einem Faltenbalg 40 umschlossene Kolbenstange 22 hervorsteht, im Querschnitt vergrößert ausgeführt. In diesem Bereich ist an das Gehäuse 26 eine Strebe 42 einstückig angeformt, welche sich ausgehend von der in Fig. 1 oberen Längsseite 30 des Gehäuses 26 bogenförmig vom Gehäuse 26 wegerstreckt, wobei ihr freies Ende 44 fast parallel zur Kolbenstange 22 verläuft. Die sich in der Draufsicht gemäß Fig. 2 ausgehend vom Gehäuse 26 zum freien Ende 44 hin verjüngende Strebe 42 hat einen im wesentlichen I-förmigen Querschnitt mit einem Oberflansch 46, welcher mit einem Unterflansch 48 über einen in Fig. 2 geschnitten dargestellten Steg 50 verbunden ist. Ferner ist die Strebe 42 mit einer Mehrzahl von Querrippen 52 fachwerkartig ausgesteift, die jeweils mit dem Steg 50 verbunden sind und sich zwischen dem Oberflansch 46 und dem Unterflansch 48 erstrecken. Am freien Ende 44 weist die Strebe 42 als Bestandteil der Lagerstelle 20 für das Kupplungspedal 16 schließlich ein quer zur Längsachse 36 des Geberzylinders 14 verlaufendes, hohlzylindrisches Lagerauge 54 auf, das in Fig. 2 deutlich zu erkennen ist.

Das aus Kunststoff oder Stahlblech bestehende Kupplungspedal 16 ist als Winkel mit zwei Schenkeln 56, 58 ausgebildet, die gemäß Fig. 1 einen Winkel von etwa 90° einschließen. Der in Fig. 1 untere, erste Schenkel 56 ist an seinem freien Ende 60 auf einer Seite mit einer Trittplatte 62 und auf der gegenüberliegenden Seite mit einem Anschlag 64 versehen. Der in Fig. 1 obere, zweite Schenkel 58 ist kürzer und in Querrichtung schmaler als der erste Schenkel 56 ausgebildet. Am freien Ende 66 des zweiten Schenkels 58 ist die Übertotpunktfeder 18 angelenkt, wie nachfolgend noch näher beschrieben werden wird. Der in Fig. 2 geschnitten dargestellte Verbindungsabschnitt 68 der Schenkel 56, 58 hat eine Querbohrung 70, die Bestandteil der Lagerstelle 20 des Kupplungspedals 16 ist. Schließlich ist der erste Schenkel 56 des Kupplungspedals 16 auf seiner dem Geberzylinder 14 zugewandten Seite zwischen dem Verbindungsabschnitt 68 und dem Anschlag 64 mit einer näher zum Verbindungsabschnitt 68 hin gelegenen Aussparung 72 versehen. Die Aussparung 72 dient der Aufnahme eines an sich bekannten Federelements 74, das im montierten Zustand der Betätigungsvorrichtung 10 einen Kugelkopf 76 der Kolbenstange 22 des Geberzylinders 14 zug- und druckfest aber dennoch verschwenkbar am Kupplungspedal 16 festlegt.

Das Kupplungspedal 16 ist, wie in Fig. 2 gezeigt, an seinem Verbindungsabschnitt 68 mittels einer vorzugsweise metallischen Bundhülse 78 am Geberzylinder 14 verschwenkbar gelagert (Lagerstelle 20). Die Bundhülse 78 hat einen hohlzylindrischen Mittelabschnitt 80, der sowohl das Lagerauge 54 an der Strebe 42 des Geberzylinders 14 als auch die Querbohrung 70 im Verbindungsabschnitt 68 des Kupplungspedals 16 durchgreift. Zu beiden Seiten des Mittelabschnitts 80 ist die Bundhülse 78 symmetrisch mit jeweils einem vorzugsweise durch Umbördeln ausgebildeten Ringbund 82 versehen, der verhindert, daß die Bundhülse 78 aus dem Lagerauge 54 bzw. der Querbohrung 70 herausgezogen werden kann. Um eine leichte Verschwenkbarkeit des Kupplungspedals 16 bezüglich des Geberzylinders 14 zu gewährleisten, kann die Bundhülse 78 ein geringfügiges Axial- und Radialspiel bezüglich des Lagerauges 54 bzw. der Querbohrung 70 aufweisen.

Wie insbesondere in Fig. 2 zu erkennen ist, ist die Übertotpunktfeder 18 zu beiden Seiten auf jeweils einen mit einem Absatz versehenen Federteller 84 aus Kunststoff oder Metall aufgesteckt, der einen kreisrunden Querschnitt aufweist. Auf der von dem Absatz abgewandten Seite hat jeder Federteller 84 einen Steg 86, in den eine Querbohrung 88 eingebracht ist. Der in Fig. 2 rechte Federteller 84 ist an dem zweiten Schenkel 58 des Kupplungspedals 16 verschwenkbar angelenkt, wozu der Steg 86 des Federtellers 84 in einem am freien Ende 66 des zweiten Schenkels 58 vorgesehenen Schlitz 90 mit geringfügigem Spiel aufgenommen ist, während ein Lagerbolzen 92 sowohl die Querbohrung 88 des Federtellers 84 als auch eine im Bereich des Schlitzes 90 am freien Ende 66 des zweiten Schenkels 58 ausgebildete Querbohrung durchgreift. Dabei liegt der Lagerbolzen 92 mit einem endseitig vorgesehenen Kopf 94 kreisringflächig am zweiten Schenkel 58 des Kupplungspedals 16 an und wird mittels eines Sicherungsrings 96 am Platz gehalten, welcher in einer am anderen Ende des Lagerbolzens 92 ausgebildeten Nut aufgenommen ist.

Der in Fig. 2 linke Federteller 84 ist an seinem Steg 86 ebenfalls mittels einer vorzugsweise metallischen Bundhülse 98 am Geberzylinder 14 verschwenkbar gelagert (Lagerstelle 24), was in Fig. 3 vergrößert dargestellt ist. Auch die Bundhülse 98 hat einen hohlzylindrischen Mittelabschnitt 100, der sowohl das Lagerauge 38 am Steg 34 des Geberzylindergehäuses 26 als auch die Querbohrung 88 im Steg 86 des Federtellers 84 durchgreift. Zu beiden Seiten des Mittelabschnitts 100 ist die Bundhülse 98 symmetrisch mit jeweils einem vorzugsweise durch Umbördeln ausgebildeten Ringbund 102 versehen, der verhindert, daß die Bundhülse 98 aus dem Lagerauge 38 bzw. der Querbohrung 88 herausgezogen werden kann. Um eine leichte Verschwenkbarkeit der Übertotpunktfeder 18 bezüglich des Geberzylinders 14 zu gewährleisten, kann auch die Bundhülse 98 ein geringfügiges Axial- und Radialspiel bezüglich des Lagerauges 38 bzw. der Querbohrung 88 aufweisen.

Aus der obigen Beschreibung ist ersichtlich, daß die Übertotpunktfeder 18 relativ zum Geberzylinder 14 um die Querachse 104 der Lagerstelle 24 am Geberzylinder 14 und relativ zum Kupplungspedal 16 um die Querachse 106 des Lagerbolzens 92 am zweiten Schenkel 58 des Kupplungspedals 16 verschwenken kann. Gleichzeitig kann das Kupplungspedal 16 relativ zum Geberzylinder 14 um die Querachse 108 der Lagerstelle 20 am Geberzylinder 14 verschwenken. Ein Entfesseln dieser durch die Übertotpunktfeder 18 vorgespannten Gelenkkette wird durch die gelenkige Anbindung des Kugelkopfs 76 der Kolbenstange 22 am in der Aussparung 72 des Kupplungspedals 16 befestigten Federelement 74 verhindert.

Diese unabhängig von ihrer Befestigung am Pedalbock 12 schon in sich geschlossene, vorgespannte Gelenkkette kann sich nun in zwei Endstellungen befinden, nämlich zum einen in der in den Fig. 1 und 2 dargestellten Endstellung, die im eingebauten Zustand der Betätigungsvorrichtung 10 dem eingerückten Zustand der Kupplung entspricht (aus dem Gehäuse 26 herausgezogene Kolbenstange 22) und in der die Übertotpunktfeder 18 am Kupplungspedal 16 ein in Fig. 1 gegen den Uhrzeigersinn gerichtetes Moment um die Lagerstelle 20 am Geberzylinder 14 erzeugt. Zum anderen in einer Endstellung, in welcher die Übertotpunktfeder 18 am Kupplungspedal 16 ein in Fig. 1 im Uhrzeigersinn gerichtetes Moment um die Lagerstelle 20 am Geberzylinder 14 erzeugt und die im eingebauten Zustand der Betätigungsvorrichtung 10 dem ausgerückten Zustand der Kupplung entspricht (in das Gehäuse 26 eingeschobene Kolbenstange 22). Wird mit anderen Worten gesagt das Kupplungspedal 16 ausgehend von der in Fig. 1 dargestellten Endstellung um die Schwenkachse 108 der Lagerstelle 20 am Geberzylinder 14 im Uhrzeigersinn verschwenkt, so wird die Übertotpunktfeder 18 zunächst zusammengedrückt bis die durch die Schwenkachsen 104 und 106 der Übertotpunktfeder 18 gehende Wirklinie 110 der Übertotpunktfeder 18 durch die Schwenkachse 108 der Lagerstelle 20 wandert bzw. die drei Schwenkachsen 104, 106 und 108 in einer Ebene liegen (instabile Totpunktlage). Bei einem weiteren Verschwenken des Kupplungspedals 16 im Uhrzeigersinn entspannt sich die Übertotpunktfeder 18 wieder und drückt dabei das Kupplungspedal 16 in seine andere Endstellung. Die Rückstellung des Kupplungspedals 16 in seine in Fig. 1 dargestellte Endstellung erfolgt entsprechend, d.h. zunächst wird beim Verschwenken des Kupplungspedals 16 um die Schwenkachse 108 der Lagerstelle 20 im Gegenuhrzeigersinn die Übertotpunktfeder 18 zusammengedrückt bis die Totpunktlage erreicht ist; danach drückt die Übertotpunktfeder 18 das Kupplungspedal 16 in seine in Fig. 1 gezeigte Endstellung. Es bedarf keiner näheren Erläuterung, daß im eingebauten Zustand der Betätigungsvorrichtung 10 äußere Kräfte auf die Betätigungsvorrichtung 10 wirken, nämlich eingangsseitig die über die Trittplatte 62 eingeleiteten Fußkräfte und ausgangsseitig die die Federkraft der Übertotpunktfeder 18 übersteigende Federkraft der Kupplung, welche über die Flüssigkeitssäule zwischen Nehmerzylinder und Geberzylinder 14 auf letzteren übertragen wird und von dort über die Kolbenstange 22 auf das Kupplungspedal 16 zurückwirkt.

Zu erwähnen ist in diesem Zusammenhang noch, daß es sich bei der dargestellten und beschriebenen Übertotpunktfeder 18 ersichtlich um eine Druckfeder handelt. Ebensogut kann den jeweiligen Erfordernissen entsprechend aber auch eine Zugfeder als Übertotpunktfeder zum Einsatz kommen, wie es prinzipiell schon im Stand der Technik bekannt ist. Da dies jedoch mit einem höheren Bauwand verbunden wäre, wird hier die Ausbildung der Übertotpunktfeder als Druckfeder bevorzugt.

Im dargestellten Ausführungsbeispiel wird die Gelenkverbindung zwischen dem Geberzylinder 14 und dem Kupplungspedal 16 (Lagerstelle 20) bzw. der Übertotpunktfeder 18 (Lagerstelle 24) mittels Bundhülsen 78 bzw. 98 realisiert. Denkbar ist aber auch, daß das eine Teil das damit verschwenkbar verbundene andere Teil unmittelbar, d.h. ohne Bundhülse lagert (nicht dargestellt); so könnte z.B. das Lagerauge 38 am in Fig. 3 oberen Ende mit einem im Durchmesser verjüngten Absatz versehen sein, der sich durch die Querbohrung 88 im Steg 86 des Federtellers 84 hindurch erstreckt. Hier wäre dann der Federteller 84 im montierten Zustand der Betätigungsvorrichtung 10 zwischen der Schulter am Absatz des Lagerauges 38 auf der einen Seite (unten) und dem Pedalbock 12 auf der anderen Seite (oben) mit geringem Axialspiel verschwenkbar gehalten.

Bei dem vorliegenden Ausführungsbeispiel sind die am Geberzylinder 14 vorgesehenen Lagerstellen 20, 24 für das Kupplungspedal 16 und die Übertotpunktfeder 18 vorteilhaft gleichzeitig als Befestigungsstellen ausgeführt, die der Befestigung des aus Geberzylinder 14, Kupplungspedal 16 und Übertotpunktfeder 18 zusammengefügten, vormontierten Verbunds am Pedalbock 12 dienen, wie im folgenden näher beschrieben werden soll.

In den Fig. 1 und 2 ist lediglich eine Seitenwand 112 des an der Quer- oder Spritzwand (nicht dargestellt) eines Kraftfahrzeugvorderteils montierten Pedalbocks 12 dargestellt. Die Seitenwand 112 ist in der Draufsicht gemäß Fig. 2 mehrfach abgewinkelt und hat an beiden Seiten jeweils eine Befestigungsstelle für den aus Geberzylinder 14, Kupplungspedal 16 und Übertotpunktfeder 18 bestehenden, vormontierten Verbund. Bei der in den Fig. 1 und 2 linken Befestigungsstelle handelt es sich um einen zylindrischen Ansatz 114, der an der Seitenwand 112 des Pedalbocks 12 vorzugsweise angeschweißt ist und als Gewindeabschnitt eine zentrale Gewindebohrung 116 aufweist, wie insbesondere in Fig. 3 zu erkennen ist. In die Gewindebohrung 116 ist eine die Bundhülse 98 durchdringende Schraube 118 eingeschraubt, deren Kopf 120 die Bundhülse 98 auf der vom Pedalbock 12 abgewandten Seite hintergreift und somit den aus Geberzylinder 14, Kupplungspedal 16 und Übertotpunktfeder 18 zusammengefügten, vormontierten Verbund am Pedalbock 12 befestigt. Die über den Kopf 120 der Schraube 118 in den in Fig. 3 unteren Ringbund 102 der Bundhülse 98 eingeleiteten Befestigungskräfte werden über den Mittelabschnitt 100 der Bundhülse 98 weitergeleitet und stützen sich über den in Fig. 3 oberen Ringbund 102 am Ansatz 114 des Pedalbocks 12 ab. Somit sind die durch die Schraube 118 in Richtung der Querachse 104 aufgebrachten Befestigungskräfte vom Lagerauge 38 des Geberzylinders 14 und vom Federteller 84 für die Übertotpunktfeder 18 entkoppelt, so daß sie das Verschwenken der Übertotpunktfeder 18 relativ zum Geberzylinder 14 nicht behindern. Die gleiche Wirkung könnte hier bei einer Ausbildung ohne Bundhülse auch mittels einer Lagerschraube erzielt werden, deren Lagerabschnitt über einen Absatz in den im Durchmesser kleineren Gewindeabschnitt übergeht; der ein geringfügiges Axialspiel zwischen den relativ zueinander verschwenkenden Teilen schaffende Abstand zwischen Schraubenkopf und Absatz zum Gewindeabschnitt wäre konstant.

Gleichzeitig werden die über die Übertotpunktfeder 18 senkrecht zur Querachse 104 auf die Lagerstelle 24 wirkenden Betätigungskräfte über den Steg 86 des Federtellers 84 in den Mittelabschnitt 100 der Bundhülse 98 und von da vornehmlich in den Ansatz 114 des Pedalbocks 12 weitergeleitet, so daß das aus Kunststoff bestehende Gehäuse 26 des Geberzylinders 14 entlastet wird, was eine gewichtsoptimierte Ausbildung des Gehäuses 26 gestattet.

Die in den Fig. 1 und 2 rechte Befestigungsstelle für den aus Geberzylinder 14, Kupplungspedal 16 und Übertotpunktfeder 18 zusammengefügten, vormontierten Verbund ist in Fig. 2 aufgebrochen dargestellt. Hier hat die Seitenwand 112 des Pedalbocks 12 einen im Querschnitt verstärkten Bereich 122, welcher mit einer Querbohrung 124 versehen ist, durch die sich ein Lagerbolzen 126 hindurch erstreckt. Der am Pedalbock 12 befestigte Lagerbolzen 126 durchgreift die Bundhülse 78 der Lagerstelle 20 und trägt auf der vom Pedalbock 12 abgewandten Seite an seinem über die Bundhülse 78 vorstehenden Ende 128 einen in einer im Lagerbolzen 126 ausgebildeten Nut 130 aufgenommenen Sicherungsring 132, um den aus Geberzylinder 14, Kupplungspedal 16 und Übertotpunktfeder 18 zusammengefügten, vormontierten Verbund am Pedalbock 12 zu befestigen. Auch hier stützen sich die über das Kupplungspedal 16 senkrecht zur Querachse 108 auf die Lagerstelle 20 aufgebrachten Betätigungskräfte mittels des Lagerbolzens 126 vornehmlich am Pedalbock 12 ab, so daß die am Gehäuse 26 des Geberzylinders 14 ausgebildete Strebe 42 nicht über Gebühr beansprucht wird. Zu erwähnen ist in diesem Zusammenhang noch, daß der Lagerbolzen 126 an seinem in Fig. 2 oberen Ende vorteilhaft das Brems- und das Gaspedal (nicht dargestellt) tragen kann. Somit kann ein und derselbe Pedalbock sowohl für Kraftfahrzeuge ohne Kupplungspedal als auch für Kraftfahrzeuge mit Kupplungspedal verwendet werden; ist ein Kupplungspedal vorgesehen, muß nur ein vom Pedalbock entsprechend Fig. 2 vorstehender Lagerbolzen für das oben beschriebene Pedalmodul vorhanden sein.

Obgleich im dargestellten Ausführungsbeispiel die in den Fig. 1 und 2 linke Befestigungsstelle als Schraubverbindung ausgebildet ist, während es sich bei der rechten Befestigungsstelle um eine Steckverbindung mit Sicherungsring handelt, können diese Befestigungsarten den jeweiligen Erfordernissen entsprechend untereinander ausgetauscht werden bzw. die Befestigungsstellen nur auf eine Weise, d.h. nur als Schraubverbindungen oder nur als Steckverbindungen mit Sicherungsringen ausgebildet sein. Eine Zweipunktbefestigung des Pedalmoduls am Pedalbock bietet sich jedenfalls an, um ein Verdrehen des Pedalmoduls bei Kraftbeaufschlagung zuverlässig zu verhindern.

Aus der obigen Beschreibung ist für den Fachmann unmittelbar ersichtlich, daß zur Montage der Betätigungsvorrichtung 10 der aus Geberzylinder 14, Kupplungspedal 16 und Übertotpunktfeder 18 zusammengefügte, vormontierte Verbund lediglich auf den Pedalbock 12 aufzustecken und mittels Sicherungsringen zu sichern bzw. an den Pedalbock 12 anzuschrauben ist, ohne daß weitere Montageschritte, beispielsweise ein Ausrichten oder Ausfluchten der relativ zueinander beweglichen Teile der Betätigungsvorrichtung 10 oder ein Vorspannen der Übertotpunktfeder 18, notwendig wären.

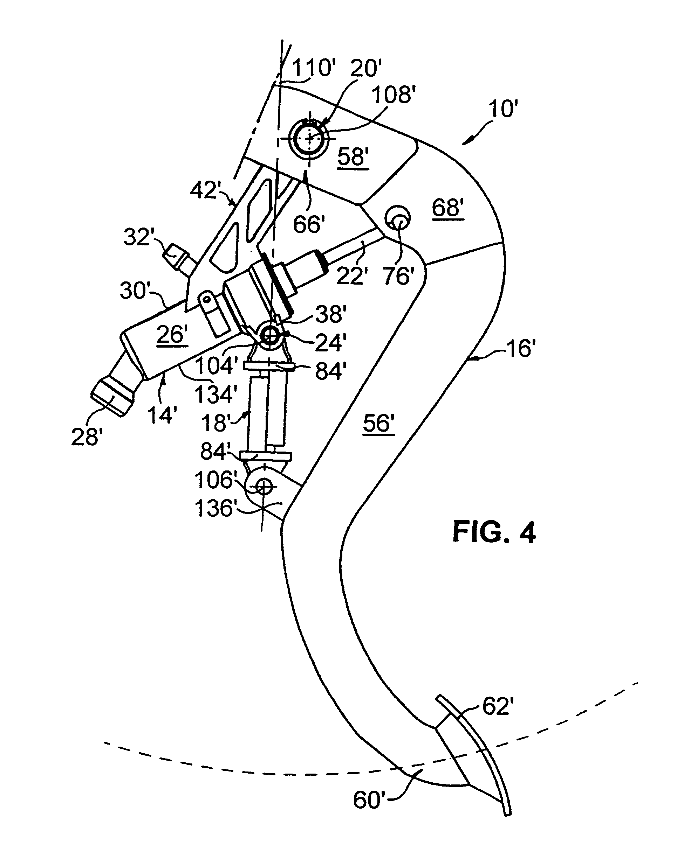

Die Fig. 4 zeigt ein weiteres Ausführungsbeispiel einer Betätigungsvorrichtung 10', die noch nicht am Pedalbock montiert ist. Den Teilen des unter Bezugnahme auf die Fig. 1 bis 3 beschriebenen Ausführungsbeispiels entsprechende Teile sind mit entsprechenden Bezugszeichen versehen. Das weitere Ausführungsbeispiel wird im folgenden nur insoweit beschrieben, als es sich vom obigen Ausführungsbeispiel unterscheidet.

Während bei dem unter Bezugnahme auf die Fig. 1 bis 3 beschriebenen Ausführungsbeispiel die Übertotpunktfeder 18 mit ihrem in den Fig. 1 und 2 linken Ende auf der Längsseite 30 des Geberzylindergehäuses 26, von der sich die Strebe 42 wegerstreckt, am Geberzylindergehäuse 26 verschwenkbar gelagert ist, ist bei dem Ausführungsbeispiel gemäß Fig. 4 die lediglich schematisch dargestellte Übertotpunktfeder 18' mit ihrem in Fig. 4 oberen Ende auf der von der Strebe 42' abgewandten Längsseite 134' des Geberzylindergehäuses 26' mittels eines Federtellers 84' am Geberzylindergehäuse 26' verschwenkbar gelagert. Dazu ist das Gehäuse 26' an seinem im Querschnitt vergrößerten, in Fig. 4 rechten Ende mit einem Lagerauge 38' versehen, welches bezüglich der Längsachse des Geberzylinder 14' um 180° zur Strebe 42' versetzt angeordnet ist.

Das Kupplungspedal 16' hat hier einen im wesentlichen U-förmigen Querschnitt und ist ebenfalls als Winkel mit zwei Schenkeln 56', 58' ausgebildet. Das in Fig. 4 untere Ende der Übertotpunktfeder 18' ist über einen Federteller 84' an einem am ersten Schenkel 56' des Kupplungspedal 16' angebrachten Lagerauge 136' verschwenkbar angelenkt. Im Bereich des Lagerauges 136' ist der erste Schenkel 56' des Kupplungspedals 16' nochmals abgewinkelt, so daß das mit der Trittplatte 62' versehene freie Ende 60' des ersten Schenkels 56' in Fig. 4 nach rechts vorsteht. Der Geberzylinder 14' ist mittels seiner Kolbenstange 22' mit dem Verbindungsabschnitt 68' der Schenkel 56', 58' wirkverbunden, während das Kupplungspedal 16' selbst am freien Ende 66' des kürzeren zweiten Schenkels 58' an der Lagerstelle 20' der Strebe 42' verschwenkbar gelagert ist, wobei das Kupplungspedal 16' die Strebe 42' mit seinem U-förmigen Querschnitt umfaßt.

Auch bei diesem Ausführungsbeispiel kann die Übertotpunktfeder 18' relativ zum Geberzylinder 14' um die Querachse 104' der Lagerstelle 24' am Lagerauge 38' des Geberzylinders 14' und relativ zum Kupplungspedal 16' um die Querachse 106' am Lagerauge 136' des ersten Schenkels 56' des Kupplungspedals 16' verschwenken. Gleichzeitig kann das Kupplungspedal 16' relativ zum Geberzylinder 14' um die Querachse 108' der Lagerstelle 20' an der Strebe 42' des Geberzylinders 14' verschwenken. Ein Entfesseln dieser durch die Übertotpunktfeder 18' vorgespannten Gelenkkette wird ebenfalls durch die gelenkige Anbindung des Kugelkopfs 76' der Kolbenstange 22' am Verbindungsabschnitt 68' des Kupplungspedals 16' verhindert. Bezüglich dieser Anbindung sowie der Ausbildung der Schwenklager zwischen den drei Komponenten Geberzylinder 14', Kupplungspedal 16' und Übertotpunktfeder 18' kann an dieser Stelle auf die unter Bezugnahme auf die Fig. 1 bis 3 erfolgte Beschreibung verwiesen werden, um Wiederholungen zu vermeiden. Auch die Anbindung dieser Betätigungsvorrichtung 10' an einen Pedalbock (nicht dargestellt) über die Lagerstellen 20' und 24' kann analog der bereits beschriebenen Anbindung erfolgen.

Während die in den Fig. 1 bis 3 dargestellte Betätigungsvorrichtung 10 mit ihrer annähernd parallelen Anordnung der Übertotpunktfeder 18 zum Gehäuse 26 des Geberzylinders 14 in der Höhe besonders flach baut (vergl. Fig. 1), hat die Betätigungsvorrichtung 10' gemäß Fig. 4 den Vorteil, daß sie beispielsweise in einer Draufsicht von rechts in Fig. 4 gesehen in der Breite besonders schmal ist, weil Geberzylinder 14', Kupplungspedal 16' und Übertotpunktfeder 18' in einer Ebene liegen.

Zu erwähnen ist in diesem Zusammenhang schließlich noch, daß in Fig. 2 zwar eine Anordnung des Kupplungspedals 16 und der Übertotpunktfeder 18 oberhalb des Geberzylindergehäuses 26 dargestellt ist, den jeweiligen Erfordernissen entsprechend Kupplungspedal 16 und Übertotpunktfeder 18 aber auch auf der anderen, vom Pedalbock 12 abgewandten Seite, d.h. in Fig. 2 unterhalb des Geberzylindergehäuses 26 angeordnet sein könnten.

### Bezugszeichenliste

- 10, 10': Betätigungsvorrichtung
- 12: Pedalbock
- 14, 14': Geberzylinder
- 16, 16': Kupplungspedal
- 18, 18': Übertotpunktfeder
- 20, 20': Lagerstelle
- 22, 22': Kolbenstange
- 24, 24': Lagerstelle
- 26, 26': Gehäuse
- 28, 28': Druckanschluß
- 30, 30': Längsseite
- 32, 32': Druckausgleichsanschluß
- 34: Steg
- 36: Längsachse
- 38, 38': Lagerauge
- 40: Faltenbalg
- 42, 42': Strebe
- 44: freies Ende
- 46: Oberflansch
- 48: Unterflansch
- 50: Steg
- 52: Querrippe
- 54: Lagerauge
- 56, 56': Schenkel
- 58, 58': Schenkel
- 60, 60': freies Ende
- 62, 62': Trittplatte
- 64: Anschlag
- 66, 66': freies Ende
- 68, 68': Verbindungsabschnitt
- 70: Querbohrung
- 72: Aussparung
- 74: Federelement
- 76, 76': Kugelkopf
- 78: Bundhülse
- 80: Mittelabschnitt
- 82: Ringbund
- 84, 84': Federteller
- 86: Steg
- 88: Querbohrung
- 90: Schlitz
- 92: Lagerbolzen
- 94: Kopf
- 96: Sicherungsring
- 98: Bundhülse
- 100: Mittelabschnitt
- 102: Ringbund
- 104, 104': Querachse
- 106, 106': Querachse
- 108, 108': Querachse
- 110, 110': Wirklinie
- 112: Seitenwand
- 114: Ansatz
- 116: Gewindebohrung
- 118: Schraube
- 120: Kopf
- 122: verstärkter Bereich
- 124: Querbohrung
- 126: Lagerbolzen
- 128: Ende
- 130: Nut
- 132: Sicherungsring
- 134': Längsseite
- 136': Lagerauge

## Patentansprüche

1. Vorrichtung (10, 10') zur Betätigung einer Kupplung, insbesondere für Kraftfahrzeuge, mit einem verschwenkbar an einer Lagerstelle (20, 20') gelagerten Betätigungshebel (16, 16'), welcher zur Erzeugung eines Betätigungsdrucks mit einem Geberzylinder (14, 14') wirkverbunden ist, und einer verschwenkbar an einer Lagerstelle (24, 24') gelagerten Übertotpunktfeder (18, 18'), die derart an dem Betätigungshebel (16, 16') angelenkt ist, daß sie bei einer Stellung des Betätigungshebels (16, 16') zwischen einer Totpunktlage und einer Endlage eine in Richtung dieser Endlage gerichtete Kraft auf den Betätigungshebel (16, 16') ausübt, **dadurch gekennzeichnet, daß** sowohl die Lagerstelle (24, 24') für die Übertotpunktfeder (18, 18') als auch die Lagerstelle (20, 20') für den Betätigungshebel (16, 16') an dem Geberzylinder (14, 14') vorgesehen ist, so daß die Übertotpunktfeder (18, 18') und der Betätigungshebel (16, 16') relativ zum Geberzylinder (14, 14') bewegbar sind, wobei sowohl die Lagerstelle (24, 24') für die Übertotpunktfeder (18, 18') als auch die Lagerstelle (20, 20') für den Betätigungshebel (16, 16') gleichzeitig als Befestigungsstelle ausgeführt ist, die der Befestigung des aus Geberzylinder (14, 14'), Betätigungshebel (16, 16') und Übertotpunktfeder (18, 18') zusammengefügten, vormontierten Verbunds an einem Pedalbock (12) dient.

2. Vorrichtung (10) nach Anspruch 1, **dadurch gekennzeichnet, daß** die Lagerstelle (20) für den Betätigungshebel (16) eine vorzugsweise metallische Bundhülse (78) aufweist, die mit ihrem Mittelabschnitt (80) ein am Gehäuse (26) des Geberzylinders (14) vorgesehenes Lagerauge (54) sowie eine im Betätigungshebel (16) ausgebildete Bohrung (70) durchgreift und zu beiden Seiten ihres Mittelabschnitts (80) mit jeweils einem Ringbund (82) versehen ist, um den Betätigungshebel (16) am Gehäuse (26) des Geberzylinders (14) verschwenkbar zu halten.

3. Vorrichtung (10) nach Anspruch 1 oder 2, **dadurch gekennzeichnet, daß** die Lagerstelle (24) für die Übertotpunktfeder (18) eine vorzugsweise metallische Bundhülse (98) aufweist, die mit ihrem Mittelabschnitt (100) ein am Gehäuse (26) des Geberzylinders (14) vorgesehenes Lagerauge (38) sowie eine in einem Federteller (84) für die Übertotpunktfeder (18) ausgebildete Bohrung (88) durchgreift und zu beiden Seiten ihres Mittelabschnitts (100) mit jeweils einem Ringbund (102) versehen ist, um den Federteller (84) für die Übertotpunktfeder (18) am Gehäuse (26) des Geberzylinders (14) verschwenkbar zu halten.

4. Vorrichtung (10, 10') nach einem der vorhergehenden Ansprüche, **dadurch gekennzeichnet, daß** die Lagerstelle (20, 20') für den Betätigungshebel (16, 16') an einer einstückig am Gehäuse (26, 26') des Geberzylinders (14, 14') angeformten Strebe (42, 42') ausgebildet ist, die sich von einer Längsseite (30, 30') des Geberzylindergehäuses (26) wegerstreckt.

5. Vorrichtung (10) nach Anspruch 4, **dadurch gekennzeichnet, daß** die Übertotpunktfeder (18) mit einem Ende auf der Längsseite (30) des Geberzylindergehäuses (26), von der sich die Strebe (42) wegerstreckt, am Geberzylindergehäuse (26) verschwenkbar gelagert und der Betätigungshebel (16) als Winkel mit zwei Schenkeln (56, 58) ausgebildet ist, wobei das andere Ende der Übertotpunktfeder (18) an dem zweiten Schenkel (58) des Betätigungshebels (16) angelenkt und der Geberzylinder (14) mittels seiner Kolbenstange (22) mit dem ersten Schenkel (56) des Betätigungshebels (16) wirkverbunden ist, während der Betätigungshebel (16) selbst am Verbindungspunkt (68) der Schenkel (56, 58) an der Lagerstelle (20) der Strebe (42) verschwenkbar gelagert ist.

6. Vorrichtung (10') nach Anspruch 4, **dadurch gekennzeichnet, daß** die Übertotpunktfeder (18') mit einem Ende auf der von der Strebe (42') abgewandten Längsseite (134') des Geberzylindergehäuses (26') am Geberzylindergehäuse (26') verschwenkbar gelagert und der Betätigungshebel (16') als Winkel mit zwei Schenkeln (56', 58') ausgebildet ist, wobei das andere Ende der Übertotpunktfeder (18') an dem ersten Schenkel (56') des Betätigungshebels (16') angelenkt und der Geberzylinder (14') mittels seiner Kolbenstange (22') mit dem Betätigungshebel (16') am Verbindungspunkt (68') der Schenkel (56', 58') wirkverbunden ist, während der Betätigungshebel (16') selbst am zweiten Schenkel (58') an der Lagerstelle (20') der Strebe (42') verschwenkbar gelagert ist.

7. Vorrichtung (10, 10') nach einem der vorhergehenden Ansprüche, **dadurch gekennzeichnet, daß** das Gehäuse (26, 26') des Geberzylinders (14, 14') aus Kunststoff besteht.

8. Kombination eines Pedalbocks und einer Vorrichtung (10) nach Anspruch 2, **dadurch gekennzeichnet, daß** ein an dem Pedalbock (12) angebrachter Lagerbolzen (126) die Bundhülse (78) durchgreift und an seinem über die Bundhülse (78) vorstehenden Ende (128) auf der vom Pedalbock (12) abgewandten Seite einen Sicherungsring (132) trägt, um den aus Geberzylinder (14), Betätigungshebel (16) und Übertotpunktfeder (18) zusammengefügten, vormontierten Verbund am Pedalbock (12) zu befestigen.

9. Kombination eines Pedalbocks und einer Vorrichtung (10) nach Anspruch 3, **dadurch gekennzeichnet, daß** der Pedalbock (12) einen Gewindeabschnitt (116) aufweist, in den eine die Bundhülse (98) durchdringende Schraube (118) eingeschraubt ist, deren Kopf (120) die Bundhülse (98) auf der vom Pedalbock (12) abgewandten Seite hintergreift, um den aus Geberzylinder (14), Betätigungshebel (16) und Übertotpunktfeder (18) zusammengefügten, vormontierten Verbund am Pedalbock (12) zu befestigen.

## Claims

1. A device (10, 10') for actuating a clutch, more particularly for motor vehicles, which has an operating lever (16, 16') pivoted on a bearing point (20, 20') and effectively connected to a master cylinder (14, 14') for production of an actuating pressure, and which has a top dead centre spring (18, 18') pivoted on a bearing point (24, 24'), which is articulated with the operating lever (16, 16') in such a way that when the operating lever (16, 16') is in a position between a dead centre and an end position it exerts a force on the operating lever (16, 16') in the direction of this end position, **characterised in that** both the bearing point (24, 24') for the top dead centre spring (18, 18') and also the bearing point (20, 20') for the operating lever (16, 16') are provided on the master cylinder (14, 14'), so that the top dead centre spring (18, 18') and the operating lever (16, 16') can move relative to the master cylinder (14, 14'), both the bearing point (24, 24') for the top dead centre spring (18, 18') and the bearing point (20, 20') for the operating lever (16, 16') being at the same time designed as a securing point, which serves for securing the pre-assembled composite unit consisting of the master cylinder (14, 14'), the operating lever (16, 16') and the top dead centre spring (18, 18') to a pedal frame (12).

2. A device (10) as defined in claim 1, **characterised in that** the bearing point (20) for the operating lever (16) has a preferably metallic collar sleeve (78), which with its middle section (80) passes through a bearing eye (54) provided on the housing (26) of the master cylinder (14) as well as a bore (70) formed in the operating lever (16), and on both sides of its middle section (80) is provided in each case with a ring collar (82) to keep the operating lever (16) pivoted on the housing (26) of the master cylinder (14).

3. A device (10) as defined in claim 1 or 2, **characterised in that** the bearing point (24) for the top dead centre spring (18) has a preferably metallic collar sleeve (98), which with its middle section (100) passes through a bearing eye (38) provided on the housing (26) of the master cylinder (14) as well as a bore (88) formed in a spring plate (84) for the top dead centre spring (18), and on both sides of its middle section (100) is provided in each case with a ring collar (102) to keep the spring plate (84) for the top dead centre spring (18) pivoted on the housing (26) of the master cylinder (14).

4. A device (10, 10') as defined in one of the preceding claims, **characterised in that** the bearing point (20, 20') for the operating lever (16, 16') is designed on a strut (42, 42') integral with the housing (26, 26') of the master cylinder (14, 14'), which extends from one of the longitudinal sides (30, 30') of the master cylinder housing (26).

5. A device (10) as defined in claim 4, **characterised in that** the top dead centre spring (18) is pivoted on the master cylinder housing (26), with one end on the longitudinal side (30) of the master cylinder housing (26), from which the strut (42) extends, and the operating lever (16) is designed as an angle with two legs (56, 58), wherein the other end of the top dead centre spring (18) is articulated with the second leg (58) of the operating lever (16) and the master cylinder (14) is effectively connected by its piston rod (22) to the first leg (56) of the operating lever (16), whilst the operating lever (16) itself is pivoted on the connection point (68) of the leg (56, 58) at the bearing point (20) of the strut (42).

6. A device (10') as defined in claim 4, **characterised in that** the top dead centre spring (18') is pivoted on the master cylinder housing (26'), with one end on the longitudinal side (134') of the master cylinder housing (26') facing away from the strut (42'), and the operating lever (16') is designed as an angle with two legs (56', 58'), wherein the other end of the top dead centre spring (18') is articulated with the first leg (56') of the operating lever (16') and the master cylinder (14') is effectively connected by its piston rod (22') with the operating lever (16') to the connection point (68') of the leg (56', 58'), whilst the operating lever (16') itself is pivoted on the second leg (58') at the bearing point (20') of the strut (42').

7. A device (10, 10') as defined in one of the above claims, **characterised in that** the housing (26, 26') of the master cylinder (14, 14') consists of plastic.

8. A combination of a pedal frame and of a device,(10) as defined in claim 2, **characterised in that** a bearing bolt (126) fitted to the pedal frame (12) passes through the collar sleeve (78) and at its end (128) projecting over the collar sleeve (78) carries a retaining ring (132) on the side facing away from the pedal frame (12), in order to secure on the pedal frame (12) the pre-assembled composite unit consisting of the master cylinder (14), the operating lever (16) and the top dead centre spring (18).

9. A combination of a pedal frame and of a device (10) as defined in claim 3, **characterised in that** the pedal frame (12) has a threaded section (116) into which is screwed a screw (118) which penetrates the collar sleeve (98), and the head (120) of the screw grasps the collar sleeve (98) on the side facing away from the pedal frame (12), in order to secure on the pedal frame (12) the pre-assembled composite unit consisting of the master cylinder (14), the operating lever (16) and the top dead centre spring (18).

## Revendications

1. Dispositif (10, 10') pour actionner un embrayage, en particulier pour véhicules automobiles, comprenant un levier d'actionnement (16, 16') monté avec faculté de pivotement sur un point de montage (20, 20') et relié de manière active à un cylindre émetteur (14, 14') pour générer une pression d'actionnement, et un ressort à dépassement de point mort (18, 18') monté avec faculté de pivotement sur un point de montage (24, 24') et relié avec articulation au levier d'actionnement (16, 16') de manière à exercer sur le levier d'actionnement (16, 16') une force dirigée en direction de cette position finale lorsque le levier d'actionnement (16, 16') est positionné entre une position de point mort et une position finale, **caractérisé en ce qu'**aussi bien le point de montage (24, 24') pour le ressort à dépassement de point mort (18, 18') que le point de montage (20, 20') pour le levier d'actionnement (16, 16') sont prévus sur le cylindre émetteur (14, 14'), de sorte que le ressort à dépassement de point mort (18, 18') et le levier d'actionnement (16, 16') sont mobiles relativement par rapport au cylindre émetteur (14, 14'), le point de montage (24, 24') pour le ressort à dépassement de point mort (18, 18') ainsi que le point de montage (20, 20') pour le levier d'actionnement (16, 16') étant réalisés simultanément comme point de fixation qui sert à fixer sur un support de pédale (12) l'ensemble prémonté composé du cylindre émetteur (14, 14'), du levier d'actionnement (16, 16') et du ressort à dépassement de point mort (18, 18').

2. Dispositif (10) selon la revendication 1, **caractérisé en ce que** le point de montage (20) pour le levier d'actionnement (16) présente une douille-collerette (78) de préférence métallique qui traverse par son tronçon central (80) un oeillet de montage (54) prévu sur le boîtier (26) du cylindre émetteur (14) ainsi qu'un perçage (70) réalisé dans le levier d'actionnement (16), et qui est munie respectivement d'un collet annulaire (82) des deux côtés de son tronçon central (80) pour maintenir le levier d'actionnement (16) avec faculté de pivotement sur le boîtier (26) du cylindre émetteur (14).

3. Dispositif (10) selon l'une ou l'autre des revendications 1 et 2, **caractérisé en ce que** le point de montage (24) pour le ressort à dépassement de point mort (18) présente une douille-collerette (98) de préférence métallique qui traverse par son tronçon central (100) un oeillet de montage (38) prévu sur le boîtier (26) du cylindre émetteur (14) ainsi qu'un perçage (88) réalisé dans un appui de ressort (84) pour le ressort à dépassement de point mort (18), et qui est munie respectivement d'un collet annulaire (102) des deux côtés de son tronçon central (100) pour maintenir le ressort à dépassement de point mort (18) avec faculté de pivotement sur le boîtier (26) du cylindre émetteur ( 14).

4. Dispositif (10, 10') selon l'une des revendications précédentes, **caractérisé en ce que** le point de montage (20, 20') pour le levier d'actionnement (16, 16') est réalisé sur une entretoise (42, 42') conformée en un seul tenant sur le boîtier (26, 26') du cylindre émetteur (14, 14') et qui s'écarte depuis un côté longitudinal (30, 30') du boîtier (26) du cylindre émetteur.

5. Dispositif (10) selon la revendication 4, **caractérisé en ce que** le ressort à dépassement de point mort (18) est monté avec faculté de pivotement sur le boîtier (26) du cylindre émetteur, avec une extrémité sur le côté longitudinal (30) du boîtier (26) du cylindre émetteur dont s'écarte l'entretoise (42), et le levier d'actionnement (16) est réalisé comme équerre à deux bras (56, 58), l'autre extrémité du ressort à dépassement de point mort (18) étant reliée avec articulation au second bras (58) du levier d'actionnement (16) et le cylindre émetteur (14) étant relié de manière active au premier bras (56) du levier d'actionnement (16) au moyen de sa tige de piston (22), tandis que le levier d'actionnement (16) est monté lui-même avec faculté de pivotement sur le point de liaison (68) des bras (56, 58) sur le point de montage (20) de l'entretoise (42).

6. Dispositif (10') selon la revendication 4, **caractérisé en ce que** le ressort à dépassement de point mort (18') est monté avec faculté de pivotement sur le boîtier (26') du cylindre émetteur, avec une extrémité sur le côté longitudinal (134') du boîtier (26) du cylindre émetteur, détourné de l'entretoise (42'), et le levier d'actionnement (16') est réalisé comme équerre à deux bras (56', 58'), l'autre extrémité du ressort à dépassement de point mort (18') étant reliée avec articulation au premier bras (56') du levier d'actionnement (16') et le cylindre émetteur (14') étant relié de manière active au levier d'actionnement (16') sur le point de liaison (68') des bras (56', 58') au moyen de sa tige de piston (22'), tandis que le levier d'actionnement (16') est monté lui-même avec faculté de pivotement sur le second bras (58') sur le point de montage (20') de l'entretoise (42').

7. Dispositif (10, 10') selon l'une des revendications précédentes, **caractérisé en ce que** le boîtier (26, 26') du cylindre émetteur (14, 14') se compose de matière plastique.

8. Combinaison d'un support de pédale et d'un dispositif (10) selon la revendication 2, **caractérisé en ce qu'**un goujon de palier (126) monté sur le support de pédale (12) traverse la douille-collerette (78) et porte une bague de blocage (132) sur son extrémité (128) en saillie au-delà de la douille-collerette (78) et sur son côté détourné du support de pédale (12), pour fixer au support de pédale (12) l'ensemble prémonté composé du cylindre émetteur (14), du levier d'actionnement (16) et du ressort à dépassement de point mort (18).

9. Combinaison d'un support de pédale et d'un dispositif (10) selon la revendication 3, **caractérisé en ce que** le support de pédale (12) présente un tronçon taraudé (116) dans lequel est vissée une vis (118) qui traverse la douille-collerette (98) et dont la tête (120) attaque par l'arrière la douille-collerette (98) sur le côté détourné du support de pédale (12), pour fixer au support de pédale (12) l'ensemble prémonté composé du cylindre émetteur (14), du levier d'actionnement (16) et du ressort à dépassement de point mort (18).
